# EUROPÄISCHE PATENTSCHRIFT

(11) **EP 3 472 060 B1**
(45) Veröffentlichungstag und Bekanntmachung des Hinweises auf die Patenterteilung: **13.10.2021**
(21) Anmeldenummer: 17724539.6
(22) Anmeldetag: 16.05.2017
(51) Int. Cl.: B65D 47/12, B65D 51/16

(54) **FLÜSSIGKEITSSPENDER**
LIQUID DISPENSER
DISTRIBUTEUR DE LIQUIDE

(30) Priorität: 20.06.2016 DE 102016210992
(43) Veröffentlichungstag der Anmeldung: 24.04.2019
(73) Patentinhaber: Aptar Radolfzell GmbH, 78315 Radolfzell (DE)
(72) Erfinder: KRAMPEN, Gerald, 78315 Radolfzell (DE); JUNG, Timo, 78315 Radolfzell (DE); GREINER-PERTH, Jürgen, 78244 Gottmadingen (DE); HERZ, Andi, 78253, Eigeltingen-Reute (DE)
(74) Vertreter: Patentanwaltskanzlei Cartagena
(86) Internationale Anmeldenummer: PCT/EP2017/061759
(87) Internationale Veröffentlichungsnummer: WO 2017/220261

(56) Entgegenhaltungen:
- EP-A2- 3 023 383
- DE-A1-102013 226 250

## Beschreibung

### ANWENDUNGSGEBIET UND STAND DER TECHNIK

Die Erfindung betrifft einen Flüssigkeitsspender zum Austragen von insbesondere pharmazeutischen Flüssigkeiten nach dem Oberbegriff des Anspruchs 1. Ein solcher Flüssigkeitsspender verfügt über einen Austragkopf mit Austragöffnung sowie über eine Kappe mit einem Kappenkörper, der im aufgesetzten Zustand die Austragöffnung schützt.

Die Kappenkörper erfindungsgemäßer Flüssigkeitsspender verfügen über eine Belüftungsöffnung, damit nach Inbetriebnahme ein Luftaustausch zwischen dem Innenraum des Kappenkörpers und einer umgebenden Atmosphäre möglich ist.

Aus der DE 10 2013 226 250 A1 ist es bereits bekannt, eine Belüftungsöffnung im Kappenkörper mit einem Klebestreifen oder einer angespritzten Abziehlasche zu schließen, die im Zuge der Inbetriebnahme entfernt werden.

### AUFGABE UND LÖSUNG

Aufgabe der Erfindung ist es, eine fertigungstechnisch günstige Möglichkeit zu schaffen, um zu gewährleisten, dass durch die Belüftungsöffnung vor Inbetriebnahme des Spenders keine Kontamination an die Austragöffnung gelangt.

Gemäß der Erfindung ist ein erfindungsgemäßer Flüssigkeitsspender wie im Anspruch 1 erläutert ausgebildet. Der Flüssigkeitsspender verfügt über einen Austragkopf, an dem eine Austragöffnung vorgesehen ist, sowie über eine Kappe mit einem Kappenkörper, der auf den Austragkopf aufsetzbar und von diesem abnehmbar ist und der im aufgesetzten Zustand die Austragöffnung überdeckt. Dieser Kappenkörper verfügt über die genannte Belüftungsöffnung, die eine umgebende Atmosphäre mit einem Innenraum des Kappenkörpers verbindet, so dass nach Inbetriebnahme des Flüssigkeitsspenders bei aufgesetztem Kappenkörper die vom Kappenkörper überdeckte Austragöffnung durch die Verbindung mit der umgebenden Atmosphäre abtrocknen kann.

Die Kappe verfügt weiterhin über eine angespritzte Abziehabschnitt, der im Lieferzustand die Belüftungsöffnung abdeckt und stoffschlüssig mit dem Kappenkörper verbunden ist, sowie über einen Originalitätsabschnitt, der im Lieferzustand des Spenders ein Abnehmen des Kappenkörpers verhindert, bis der Originalitätsabschnitt vom Kappenkörper entfernt worden ist. Die Kappe verfügt erfindungsgemäß über ein als Ganzes vom Kappenkörper trennbares Segment, welches diesen Originalitätsabschnitt und den Abziehabschnitt umfasst.

Die vorgesehene Kappe verfügt demnach über den genannten Kappenkörper, der bestimmungsgemäß wiederverwendbar auf dem Austragkopf aufsetzbar ist und an diesem im aufgesetzten Zustand kraftschlüssig oder formschlüssig gehalten wird, sowie das hiervon abtrennbare Segment, welches mindestens den Originalitätsabschnitt und den Abziehabschnitt umfasst. Der Originalitätsabschnitt, der vorzugsweise in Form eines am Kappenkörper im Lieferzustand angespritzten umlaufenden Originalitätsbandes ausgestaltet ist, zeigt an, dass der Spender noch nicht verwendet wurde, da ein Abtrennen der Kappe erst nach Abtrennen des Originalitätsabschnittes möglich ist.

Die Belüftungsöffnung ist eine Durchbrechung im Kappenkörper, die bei dieser ersten Variante der Erfindung vorzugsweise in der Mantelfläche des Kappenkörpers angeordnet ist. Der Abziehabschnitt verschließt im Lieferzustand diese Belüftungsöffnung und ist vorzugsweise umlaufend mit einem Rand der Belüftungsöffnung einstückig verbunden, wobei das Material, vorzugsweise ein weicher Kunststoff, im Verbindungsbereich zwischen Kappenkörper und Abziehabschnitt besonders dünn ist, um die Trennung zu erleichtern.

Durch die gemeinsame Gestaltung des die Belüftungsöffnung im Lieferzustand überdeckenden Abziehabschnitts sowie des Originalitätsabschnitts ist gewährleistet, dass in der bestimmungsgemäßen Weise bei der Inbetriebnahme des Flüssigkeitsspenders der Abziehabschnitt vom Kappenkörper getrennt wird und hierbei die Belüftungsöffnung freigibt. Die Gefahr ist gering, dass ein Benutzer das trennbare Segment nur im Bereich des Originalitätsschutzes von dem Kappenkörper trennt, es im Bereich der Belüftungsöffnungjedoch daran belässt.

Das trennbare Segment kann über einen nicht am Kappenkörper angeformten freien Verbindungsabschnitt zwischen dem Abziehabschnitt und dem Originalitätsabschnitt verfügen.

Der freie Verbindungsabschnitt, der den Abziehabschnitt und den Originalitätsabschnitt miteinander verbindet, gestattet es, die Belüftungsöffnung in vergleichsweise großer Entfernung zum Originalitätsabschnitt anzuordnen. Zudem wird die bestimmungsgemäße Art der Inbetriebnahme des Spenders hierdurch sehr einfach erfassbar. Der freie Verbindungsabschnitt macht es unmittelbar offensichtlich, dass der Abziehabschnitt und der Originalitätsabschnitt zusammenhängen, so dass der Benutzer auch bei erstmaliger Verwendung eines erfindungsgemäßen Spenders in der bestimmungsgemäßen Weise merkt, wie die Inbetriebnahme durch Trennen des Originalitätsabschnittes und des Abziehabschnittes erfolgen soll.

Das trennbare Segment verfügt erfindungsgemäß über einen Greifabschnitt, der derart am trennbaren Segment angebracht ist, dass eine Kraftbeaufschlagung des Greifabschnitts weg vom Kappenkörper zunächst eine Trennung des Abziehabschnitts vom Kappenkörper und erst anschließend eine Trennung des Originalitätsabschnitts vom Kappenkörper verursacht.

Bei dem Greifabschnitt handelt es sich um einen zum Erfassen insbesondere mit Daumen und Zeigefinger geeigneten Abschnitt des vom Kappenkörper trennbaren Segments. Insbesondere kann der Greifabschnitt durch seine Formgebung und eine Fläche von vorzugsweise mindestens 8 mm x 8 mm als Greifabschnitt erkennbar sein. Zusätzlich kann auch eine Riffelung oder dergleichen vorgesehen sein, um die Funktionsweise zu verdeutlichen. Das trennbare Segment wird bestimmungsgemäß an diesem Greifabschnitt vom Benutzer erfasst und dann durch Kraftbeaufschlagung gegenüber dem Kappenkörper zum Trennen des trennbaren Segments verwendet. Dadurch, dass der Greifabschnitt näher am Abziehabschnitt als am Originalitätsabschnitt angeordnet ist, kommt es zunächst zu einem Öffnen der Belüftungsöffnung und erst anschließend zu einem Abtrennen des Originalitätsabschnittes. Hierdurch wird wirksam verhindert, dass ein Benutzer fälschlicherweise nur den Originalitätsabschnitt trennt, das an sich vollständig vom Kappenkörper trennbare Segment dann aber im Bereich des Abziehabschnittes am Kappenkörper belässt und somit die Belüftungsöffnung nicht öffnet.

Der Greifabschnitt kann als flächig erstreckter Abschnitt ausgebildet sein. Der Greifabschnitt ist dann vorzugsweise mittels eines mindestens 1mm langen Abstandsabschnitts, der orthogonal zum Greifabschnitt ausgerichtet ist, mit dem Abziehabschnitt verbunden.

Bei dieser Gestaltung ist vorgesehen, dass der flächige Greifabschnitt eine gegenüber dem Abziehabschnitt außen liegende Schale bildet und mit diesem über den genannten Abstandsabschnitt verbunden ist, welcher vorzugsweise derart starr ist, dass eine Kippbewegung des Greifabschnitts eine nahezu identische Kippbewegung des Abziehabschnitts verursacht. Hierdurch wird ein Öffnen der Belüftungsöffnung einfach. Durch eine Kippbewegung am Greifabschnitt beginnt der Verbindungsbereich zwischen dem Kappenkörper und dem Abziehabschnitt in der gewünschten Weise einzureißen, so dass dann ein vollständiges Trennen des Abziehabschnittes leicht möglich ist.

Der Abziehabschnitt ist vorzugsweise umlaufend entlang einer Trennlinie stoffschlüssig mit einer Innenkante der Belüftungsöffnung verbunden. Die Trennlinie weist an einer Seite eine spitz zulaufende Formgebung auf.

Unter einer spitzer Form wird verstanden, dass die Trennlinie zwischen Abziehabschnitt und umgebender Wandung des Kappenkörpers dort, wo bestimmungsgemäß die Trennung zwischen Abziehabschnitt und Kappenkörper erfolgen soll, einen spitzen Winkel bildet. An der Spitze weist die Trennlinie einen sehr geringen Krümmungsradius auf, so dass das Einreißen gleichsam an einem Punkt beginnt. Dies erleichtert die Trennung.

Die Kappe des Spenders ist vorzugsweise aus Kunststoff gefertigt, beispielsweise aus Polypropylen oder Polyethylen.

Die Gestaltung der Spender ist grundsätzlich flexibel. Es kann sich um Spender mit Pumpe oder einem schaltbaren Auslassventil handeln, mittels dessen zuvor unter Druck gesetzte Flüssigkeit gezielt ausgetragen werden kann. Insbesondere von Vorteil ist jedoch eine Gestaltung mit einer Quetschflasche als Flüssigkeitsspeicher. Bei einer solchen Gestaltung ist vorzugsweise zusätzlich vorgesehen, dass im Austragkopf ein druckabhängig öffnendes Auslassventil vorgesehen ist, welches erst bei ausreichender Druckbeaufschlagung der Flüssigkeit, insbesondere in der Quetschflasche, öffnet und somit einen Austrag von Flüssigkeit gestattet.

Die erfindungsgemäße Kappe kann zudem bei Spendern verschiedener Austragcharakteristik verwendet werden, so beispielsweise bei Sprühspendern. Insbesondere vorgesehen ist die Verwendung jedoch bei Tropfenspendern, da solche Tropfenspender die Austragöffnung umgebend über eine Tropfenbildungsfläche verfügen, an der sich bestimmungsgemäß die ausgetragene Flüssigkeit sammelt, bevor sich der Tropfen löst. Gerade bei solchen Spendern ist es von Vorteil, durch eine Kappe mit Belüftungsöffnung ein Abtrocknen nach der Benutzung zu ermöglichen.

Ein erfindungsgemäßer Spender kann insbesondere als Tropfenspender zur Abgabe von Augentropfen ausgebildet sein.

Unter den Begriff des Flüssigkeitsspenders im Sinne dieser Erfindung fallen sowohl ebenso Spender für niederviskose Flüssigkeiten ähnlich Wasser wie Spender für hochviskose, eher pastöse Flüssigkeiten.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen ein erstes Ausführungsbeispiel eines erfindungsgemäßen Spenders im Lieferzustand.
Fig. 2A und 2B zeigen die Kappe des Spenders gemäß den Figuren 1A und 1B im Zuge der Überführung des Spenders in den Nutzzustand.
Fig. 3A und 3B zeigen den Spender der Fig. 1A und 1B im Nutzzustand.

### DETAILLIERTE BESCHREIBUNG DER AUSFÜHRUNGSBEISPIELE

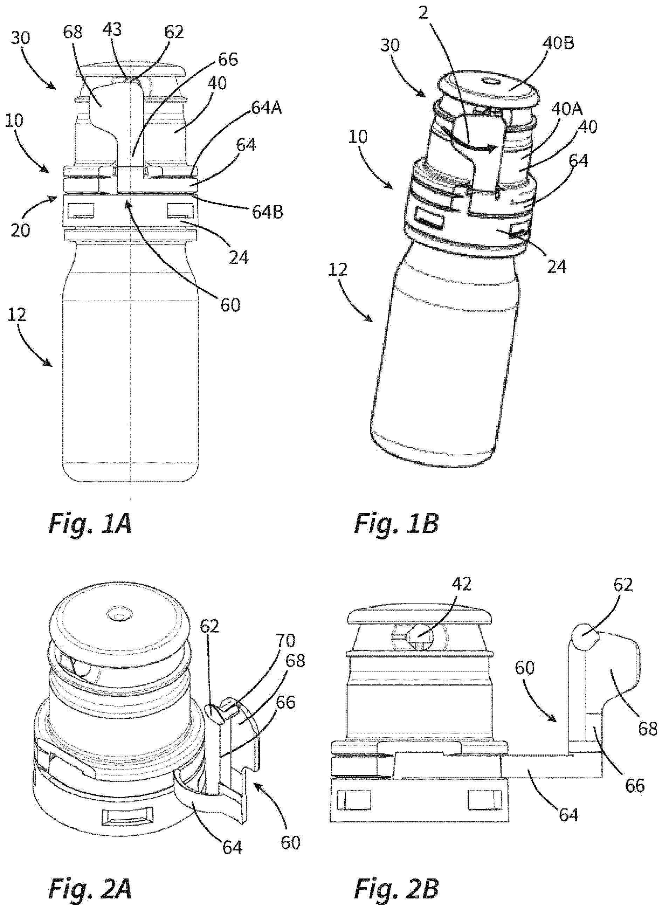

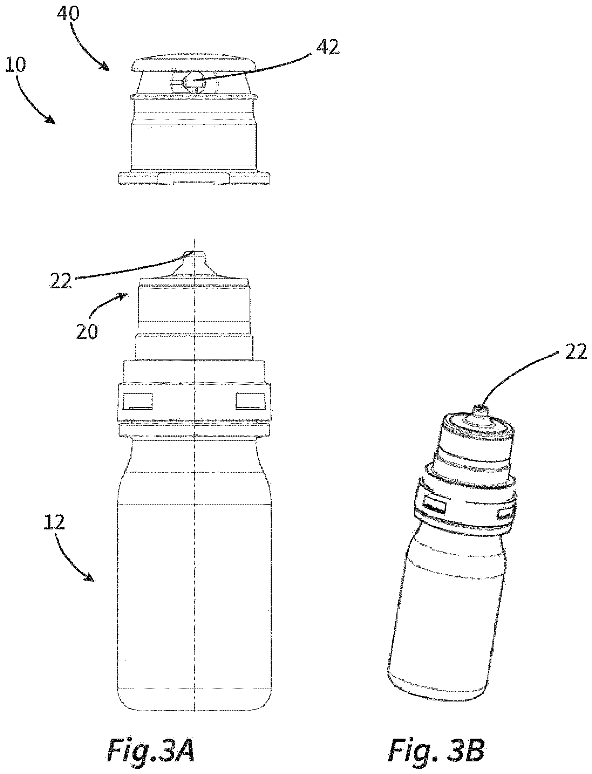

Die Fig. 1A bis 3B zeigen ein Ausführungsbeispiel eines erfindungsgemäßen Flüssigkeitsspenders.

Dabei zeigen die Fig. 1A und 1B den Flüssigkeitsspender 10 im Lieferzustand. Der Flüssigkeitsspender 10 verfügt über einen als Quetschflasche ausgebildeten Flüssigkeitsspeicher 12 sowie über einen darauf aufgesetzten Austragkopf 20 mit einer in den Fig. 1A und 1B nicht dargestellten Austragöffnung 22, die durch einen Kappenkörper 40 geschützt wird. Dieser Kappenkörper 40 ist Teil einer Kappe 30, die im Lieferzustand zusätzlich ein abtrennbares Segment 60 umfasst, welches zum Zwecke der Inbetriebnahme des Flüssigkeitsspenders 10 zunächst vom Kappenkörper 40 zu trennen ist. Dieses trennbare Segment 60 umfasst einen umlaufenden Originalitätsabschnitt 64 in Form eines Rings, der in Anbindungsbereichen 64A, 64B einerseits mit dem Kappenkörper 40 und andererseits mit einem am Austragkopf 20 befestigten ringförmigen Halteabschnitt 24 verbunden ist. Dieser Originalitätsabschnitt 64 verhindert im Lieferzustand zunächst ein Abnehmen des Kappenkörpers 40 vom Austragkopf 20.

Das abtrennbare Segment 60 verfügt darüber hinaus über einen Abziehabschnitt 62, der eine Belüftungsöffnung 42 verschließt und zu diesem Zweck entlang einer umlaufenden Trennlinie 43 einstückig mit der Mantelfläche des Kappenkörpers 40 verbunden ist. Im Bereich dieser Trennlinie ist das Kunststoffmaterial der Kappe 30 sehr dünn gestaltet, so dass sich hier eine Solltrennlinie ergibt.

Der Abziehabschnitt 62 und der Originalitätsabschnitt 64 sind miteinander über einen Verbindungsabschnitt 66 verbunden, im Bereich dessen das trennbare Segment 60 nicht mit der Mantelfläche 40A des Kappenkörpers 40 verbunden ist. Der Verbindungsabschnitt 66 ist ebenso wie ein Greifabschnitt 68 vergleichsweise dickwandig gestaltet, so dass bei der bestimmungsgemäßen Handhabung des trennbaren Segments 60 hier keine wesentlichen Verformungen auftreten.

Zur Inbetriebnahme des Spenders wird das trennbare Segment 60 im Bereich des Greifabschnitts 68 ergriffen und in Richtungdes Pfeils 2 verkippt.

Bezug nehmend auf die Fig. 2A und 2B bewirkt dies zunächst, dass der Abziehabschnitt 62 die Belüftungsöffnung 42 freigibt. Dies wird durch einen starr ausgebildeten Abstandsabschnitt 70 begünstigt, der eine vergleichsweise hohe Hebelkraft bewirkt, durch die die Verbindung zwischen Abziehabschnitt und Mantelfläche im spitz zulaufenden bezogen auf Fig. 2B linken Bereich der Belüftungsöffnung getrennt wird. Anschließend ist ein vollständiges Abziehen des Abziehabschnitts 62 von der Belüftungsöffnung unter geringem Krafteinsatz möglich. Bei der fortgesetzten Bewegung des trennbaren Segments 60 erfolgt eine Trennung des Originalitätsabschnitts 64 vom Halteabschnitt 24 sowie dem Kappenkörper 40, so dass anschließend der Kappenkörper 40 abgenommen und nach Verwendung des Spenders wieder aufgesetzt werden kann. Der Austragkopf 20 und der Kappenkörper 40 sind so aufeinander abgestimmt, dass die Kappe kraftschlüssig am Austragkopf hält.

## Patentansprüche

1. Flüssigkeitsspender (10) zum Austragen von insbesondere pharmazeutischen Flüssigkeiten mit den folgenden Merkmalen:
a. der Flüssigkeitsspender (10) verfügt über einen Austragkopf (20), an dem eine Austragöffnung (22) vorgesehen ist, und
b. der Flüssigkeitsspender (10) verfügt über eine Kappe (30) mit einem Kappenkörper (40), der auf den Austragkopf (20) aufsetzbar und von diesem abnehmbar ist und der im aufgesetzten Zustand die Austragöffnung (22) überdeckt, und
c. der Kappenkörper (40) verfügt über eine Belüftungsöffnung (42), die eine umgebende Atmosphäre mit einem Innenraum des Kappenkörpers (40) verbindet, so dass nach Inbetriebnahme des Flüssigkeitsspenders bei aufgesetztem Kappenkörper (40) die vom Kappenkörper (40) überdeckte Austragöffnung (22) durch die Verbindung mit der umgebenden Atmosphäre abtrocknen kann, und
d. die Kappe (30) verfügt über einen angespritzten Abziehabschnitt (62), der im Lieferzustand die Belüftungsöffnung (42) abdeckt und stoffschlüssig mit dem Kappenkörper (40) verbunden ist, und
e. die Kappe (30) verfügt über einen Originalitätsabschnitt (64), der im Lieferzustand des Spenders ein Abnehmen des Kappenkörpers (40) verhindert, bis der Originalitätsabschnitt (64) vom Kappenkörper (40) entfernt worden ist, und
f. die Kappe (30) verfügt über ein als Ganzes vom Kappenkörper (40) trennbares Segment (60), welches den Originalitätsabschnitt (64) und den Abziehabschnitt (62) aufweist. **gekennzeichnet durch** folgendes zusätzliches Merkmal:
g. das trennbare Segment (60) verfügt über einen Greifabschnitt (68), der derart am trennbaren Segment (60) angebracht ist, dass eine Kraftbeaufschlagung des Greifabschnitts (68) weg vom Kappenkörper (40) zunächst eine Trennung des Abziehabschnitts (62) vom Kappenkörper (40) und anschließend eine Trennung des Originalitätsabschnitts (64) vom Kappenkörper (40) verursacht.

2. Flüssigkeitsspender (10) nach Anspruch 1 mit dem folgenden Merkmal:
a. das trennbare Segment (60) verfügt über einen nicht am Kappenkörper angeformten freien Verbindungsabschnitt (66) zwischen dem Abziehabschnitt (62) und dem Originalitätsabschnitt (64).

3. Flüssigkeitsspender (10) nach Anspruch 1 mit den folgenden Merkmalen:
a. der Greifabschnitt (68) ist als flächig erstreckter Abschnitt ausgebildet, und
b. der Greifabschnitt (68) ist mittels eines mindestens 1mm langen Abstandsabschnitts (70), der orthogonal zum Greifabschnitt (68) ausgerichtet ist, mit dem Abziehabschnitt (62) verbunden.

4. Flüssigkeitsspender (10) nach einem der vorstehenden Ansprüche mit den folgenden Merkmalen:
a. der Abziehabschnitt (62) ist umlaufend entlang einer Trennlinie (43) stoffschlüssig mit einer Innenkante der Belüftungsöffnung (42) verbunden, und
b. die Trennlinie (43) weist an einer Seite eine spitz zulaufende Formgebung auf.

5. Flüssigkeitsspender (10) nach einem der vorstehenden Ansprüche mit mindestens einem der folgenden Merkmale:
a. der Originalitätsabschnitt (64) ist als umlaufendes Originalitätsstreifen ausgebildet, und/oder
b. im Lieferzustand verbindet der Originalitätsabschnitt (4) einen am Austragkopf verbleibenden Halteabschnitt (24) und den Kappenkörper (40), und/oder
c. der Kappenkörper (40) verfügt über eine Mantelfläche (40A) und eine Stirnfläche (40B), wobei die Belüftungsöffnung (42) die Mantelfläche (40A) durchbricht.

6. Flüssigkeitsspender (10) nach einem der vorstehenden Ansprüche mit mindestens einem der folgenden Merkmale:
a. die Kappe ist aus Kunststoff gefertigt, und/oder
b. der Flüssigkeitsspender verfügt über einen Flüssigkeitsspeicher (12), der als Quetschflasche ausgebildet ist, und/oder
c. der Austragkopf umfasst ein druckabhängig öffnendes Auslassventil, und/oder
d. der Austragkopf istzurAbgabe einzelnerTropfen ausgebildet.

## Claims

1. Liquid dispenser (10) for the discharge of, in particular, pharmaceutical liquids with the following features:
a. the liquid dispenser (10) has a discharge head (20), on which a discharge opening (22) is provided, and
b. the liquid dispenser (10) has a cap (30) with a cap body (40) which can be placed onto the discharge head (20) and can be removed from the latter and, in the placed-on state, covers the discharge opening (22), and
c. the cap body (40) has an aerating opening (42) which connects the surrounding atmosphere to an interior space of the cap body (40), with the result that, after initial operation of the liquid dispenser in the case of a placed-on cap body (40), the discharge opening (22) which is covered by the cap body (40) can dry off by way of the connection to the surrounding atmosphere, and
d. the cap (30) has a moulded pull-off section (62) which, in the delivery state, covers the aeration opening (42) and is connected in an integrally joined manner to the cap body (40), and
e. the cap (30) has a tamper-evident section (64) which, in the delivery state of the dispenser, prevents a removal of the cap body (40) until the tamper-evident section (64) has been removed from the cap body (40), and
f. the cap (30) has a segment (60) which can be severed in its entirety from the cap body (40) and has the tamper-evident section (64) and the pull-off section (62),
**characterized by** the following additional feature:
g. the severable segment (60) has a gripping section (68) which is attached to the severable segment (60) in such a way that loading of the gripping section (68) with force away from the cap body (40) initially causes severing of the pull-off section (62) from the cap body (40) and subsequently causes severing of the tamper-evident section (64) from the cap body (40).

2. Liquid dispenser (10) according to Claim 1 with the following feature:
a. the severable segment (60) has a free connecting section (66), which is not integrally formed on the cap body, between the pull-off section (62) and the tamper-evident section (64).

3. Liquid dispenser (10) according to Claim 1 with the following features:
a. the gripping section (68) is configured as a flatly extending section, and
b. the gripping section (68) is connected to the pull-off section (62) by means of a spacing section (70) which is at least 1 mm in length and is oriented orthogonally with respect to the gripping section (68) .

4. Liquid dispenser (10) according to one of the preceding claims with the following features:
a. the pull-off section (62) is connected, peripherally along a separating line (43), to an inner edge of the aeration opening (42) in an integrally joined manner, and
b. on one side, the separating line (43) has a shape which tapers to a point.

5. Liquid dispenser (10) according to one of the preceding claims with at least one of the following features:
a. the tamper-evident section (64) is configured as a peripheral tamper-evident strip, and/or,
b. in the delivery state, the tamper-evident section (4) connects a holding section (24), which remains on the discharge head, and the cap body (40), and/or
c. the cap body (40) has a peripheral face (40A) and an end face (40B), the aeration opening (42) penetrating the peripheral face (40A).

6. Liquid dispenser (10) according to one of the preceding claims with at least one of the following features:
a. the cap is manufactured from plastic, and/or
b. the liquid dispenser has a liquid reservoir (12) which is configured as a squeeze bottle, and/or
c. the discharge head comprises an outlet valve which opens in a pressure-dependent manner, and/or
d. the discharge head is configured for the delivery of individual drops.

## Revendications

1. Distributeur de liquide (10) pour le déchargement de liquides notamment pharmaceutiques, présentant les caractéristiques suivantes :
a. le distributeur de liquide (10) dispose d'une tête de déchargement (20), sur laquelle une ouverture de déchargement (22) est prévue, et
b. le distributeur de liquide (10) dispose d'un capuchon (30) muni d'un corps de capuchon (40), qui peut être placé sur la tête de déchargement (20) et retiré de celle-ci et qui, dans l'état mis en place, recouvre l'ouverture de déchargement (22), et
c. le corps de capuchon (40) dispose d'une ouverture d'aération (42), qui relie une atmosphère environnante à une chambre intérieure du corps de capuchon (40), de telle sorte qu'après la mise en service du distributeur de liquide, lorsque le corps de capuchon (40) est mis en place, l'ouverture de déchargement (22) recouverte par le corps de capuchon (40) peut être séchée par la liaison avec l'atmosphère environnante, et
d. le capuchon (30) dispose d'une section à ôter en tirant (62) moulée par injection qui, dans l'état de livraison, recouvre l'ouverture d'aération (42) et est reliée au corps de capuchon (40) par accouplement de matière, et
e. le capuchon (30) dispose d'une section d'inviolabilité (64) qui, dans l'état de livraison du distributeur, empêche un retrait du corps de capuchon (40) jusqu'à ce que la section d'inviolabilité (64) ait été enlevée du corps de capuchon (40), et
f. le capuchon (30) dispose d'un segment (60) séparable en entier du corps de capuchon (40), qui comprend la section d'inviolabilité (64) et la section à ôter en tirant (62),
**caractérisé par** la caractéristique supplémentaire suivante :
g. le segment séparable (60) dispose d'une section de préhension (68), qui est disposée sur le segment séparable (60) de telle sorte que l'application d'une force sur la section de préhension (68) à distance du corps de capuchon (40) provoque tout d'abord une séparation de la section à ôter en tirant (62) du corps de capuchon (40) et ensuite une séparation de la section d'inviolabilité (64) du corps de capuchon (40).

2. Distributeur de liquide (10) selon la revendication 1, présentant la caractéristique suivante :
a. le segment séparable (60) dispose d'une section de liaison libre (66) non conformée sur le corps de capuchon entre la section à ôter en tirant (62) et la section d'inviolabilité (64).

3. Distributeur de liquide (10) selon la revendication 1, présentant les caractéristiques suivantes :
a. la section de préhension (68) est configurée sous la forme d'une section étendue à plat, et
b. la section de préhension (68) est reliée à la section à ôter en tirant (62) au moyen d'une section d'écartement (70) d'une longueur d'au moins 1 mm, qui est orientée orthogonalement à la section de préhension (68) .

4. Distributeur de liquide (10) selon l'une quelconque des revendications précédentes, présentant les caractéristiques suivantes :
a. la section à ôter en tirant (62) est reliée à un bord intérieur de l'ouverture d'aération (42) en circonférence le long d'une ligne de séparation (43) par accouplement de matière, et
b. la ligne de séparation (43) présente une forme effilée sur un côté.

5. Distributeur de liquide (10) selon l'une quelconque des revendications précédentes, présentant au moins une des caractéristiques suivantes :
a. la section d'inviolabilité (64) est configurée sous la forme d'une bande d'inviolabilité circonférentielle, et/ou
b. dans l'état de livraison, la section d'inviolabilité (4) relie une section de maintien (24) restant sur la tête de déchargement et le corps de capuchon (40), et/ou
c. le corps de capuchon (40) dispose d'une surface d'enveloppe (40A) et d'une surface frontale (40B), l'ouverture d'aération (42) traversant la surface d'enveloppe (40A).

6. Distributeur de liquide (10) selon l'une quelconque des revendications précédentes, présentant au moins une des caractéristiques suivantes :
a. le capuchon est fabriqué en matière plastique, et/ou
b. le distributeur de liquide dispose d'un réservoir de liquide (12), qui est configuré sous la forme d'un flacon compressible, et/ou
c. la tête de déchargement comprend une soupape de sortie qui s'ouvre en fonction de la pression, et/ou
d. la tête de déchargement est configurée pour la distribution de gouttes individuelles.
